# EUROPÄISCHE PATENTSCHRIFT

(11) **EP 0 984 181 B1**
(45) Veröffentlichungstag und Bekanntmachung des Hinweises auf die Patenterteilung: **03.12.2003**
(21) Anmeldenummer: 99114986.5
(22) Anmeldetag: 31.07.1999
(51) Int. Cl.: F16C 13/00, D21G 1/02

(54) **Durchbiegungseinstellwalze**
Controlled deflection roll
Rouleau à réglage de la flexion

(30) Priorität: 14.08.1998 DE 19836975
(43) Veröffentlichungstag der Anmeldung: 08.03.2000
(73) Patentinhaber: Voith Paper Patent GmbH, 89522 Heidenheim (DE)
(72) Erfinder: Wenzel, Reinhard, 47809 Krefeld (DE)
(74) Vertreter: Knoblauch, Andreas, Dr.-Ing.

(56) Entgegenhaltungen:
- DE-A- 3 119 387
- DE-A- 4 217 737
- DE-B- 1 026 609
- US-A- 4 213 232

## Beschreibung

Die Erfindung bezieht sich auf eine Durchbiegungseinstellwalze mit Mantelhub, deren Mantel über eine hydrostatische Stützeinrichtung drehbar auf einem drehfest gehaltenen Träger abgestützt ist, wobei an den Walzenenden zwischen Mantel und Träger eine Radialdichtung und eine Axialdichtung vorgesehen ist.

Eine solche Durchbiegungseinstellwalze ist beispielsweise aus DE 31 19 387 C2 bekannt. Der Aufbau der Dichtungsanordnung ist kompliziert, weil sowohl die Axialdichtung als auch die Radialdichtung trotz einer wegen des Mantelhubs erheblichen Radialbewegung des Mantels relativ zum Träger ihre Funktion erfüllen müssen.

Der Erfindung liegt die Aufgabe zugrunde, bei einer Durchbiegungseinstellwalze der eingangs beschriebenen Art die Dichtungsanordnung zu vereinfachen und platzsparender auszugestalten.

Diese Aufgabe wird erfindungsgemäß dadurch gelöst, daß ein Ringkörper in einer mit dem einen Teil (Mantel oder Träger) verbundenen Ringnut radial verschiebbar angeordnet ist, an seiner der Atmosphäre benachbarten Stirnseite eine Axialdichtlippe, die an der einen Seitenwand der Ringnut anliegt, trägt und an einem Umfang eine Radialdichtlippe, die an einer mit dem anderen Teil verbundenen und daher relativ zu ihr rotierenden, zylindrischen Dichtfläche anliegt, trägt, wobei die Ringnut für einen Hub von mindestens 20 mm ausgelegt ist.

Dadurch, daß das die Axialdichtung bewirkende Element und das die Radialdichtung bewirkende Element gemeinsam von einem Ringkörper getragen werden, der seinerseits durch Verschieben in der Ringnut jede Radialbewegung zwischen Mantel und Träger auszugleichen vermag, erhält man einen sehr einfachen Aufbau der Dichtungsanordnung. Auch der Platzbedarf ist gering. Die Dichtungsanordnung ist für mit Mantelhub ausgestattete Durchbiegungseinstellwalzen aller üblichen Größen geeignet, denn es kommen auch Ringnuthübe von mehr als 20 mm, beispielsweise 30, 35 und mehr mm in Betracht.

Günstig ist es, daß die Ringnut mit dem Träger und die zylindrische Dichtfläche mit dem Mantel verbunden ist. Bei diesem Aufbau nimmt die Ringnut und der Ringkörper nicht an der Drehung des Mantels teil. Daher braucht die zugehörige Masse auch nicht beschleunigt und verzögert zu werden.

Besonders empfehlenswert ist es, daß sich die Radialdichtlippe am äußeren Umfang des Ringkörpers und die Ringnut nahe dem Träger befindet. Auf diese Weise kann der Dichtungsanordnung ein bisher unerreicht kleiner Durchmesser gegeben werden.

Bei einer bevorzugten Ausführungsform ist dafür gesorgt, daß die der Atmosphäre benachbarte Seitenwand der Ringnut radial über die andere Seitenwand der Ringnut übersteht und neben der zylindrischen Dichtfläche ein Rücksprung zur Aufnahme des überstehenden Teils vorgesehen ist. Bei dieser Konstruktion ergibt sich die größtmögliche Abstützung des Ringkörpers an der der Atmosphäre benachbarten Seitenwand der Ringnut, so daß Kräfte, die aufgrund eines im Inneren des Mantels vorhandenen Drucks auf den Ringkörper ausgeübt werden, gut aufgenommen werden können.

Vorzugsweise ist die Ringnut durch zwei Ringplatten und einen dazwischen angeordneten Abstandsring gebildet. Eine solche Anordnung ist funktionssicher und auch für Ringnuten mit großem Durchmesser anwendbar. Der dreiteilige Aufbau der Ringnut erlaubt auch ein einfaches Einfügen des Ringkörpers in die Ringnut.

Des weiteren empfiehlt es sich, daß der Ringkörper durch eine Drehmomentstütze gegen Drehung relativ zur Ringnut gesichert ist. Eine solche Drehmomentstütze kann beispielsweise durch einen radialen Stift gebildet werden, der in eine Bohrung des Ringkörpers und eine Bohrung im Ringnutengrund eingesetzt ist.

Günstig ist es ferner, daß der Ringkörper durch einen Metallring versteift ist. Da der Ringkörper in sich steif ist, folgt er jeder Radialbewegung, die der Mantel relativ zum Träger vollführt.

Insbesondere kann der Metallring durch ein Stahlband gebildet sein, das an dem von der Radialdichtlippe freien Umfang des Ringkörpers anliegt. An diesem Umfang ergibt sich die größtmögliche Angriffsfläche zwischen Stahlband und Ringkörper. In der Regel bedarf es keiner zusätzlichen Befestigungsmaßnahmen.

Von Vorteil ist es auch, daß der Ringkörper neben der Radialdichtlippe einen mit Durchbrüchen versehenen Stützflansch trägt. Der Stützflansch gibt dem Ringkörper eine definierte Lage relativ zur zylindrischen Dichtfläche. Daher erhält man eine definierte Verformung der Radialdichtlippe.

Vorzugsweise ist zumindest eine Dichtlippe einstückig mit dem Ringkörper gebildet. Dies gilt insbesondere, wenn der Ringkörper aus Kunststoff, wie Polytetrafluoräthylen, besteht.

Die Erfindung ist nachstehend anhand in der Zeichnung dargestellter bevorzugter Ausführungsbeispiele näher beschrieben. Hierin zeigen:
- Fig. 1: einen Teilschnitt durch das Ende einer Durchbiegungseinstellwalze gemäß der Erfindung,
- Fig. 2: eine vergrößerte Darstellung der Dichtungsanordnung und
- Fig. 3: in einem Schnitt ähnlich Fig. 1 ein zweites Ausführungsbeispiel.

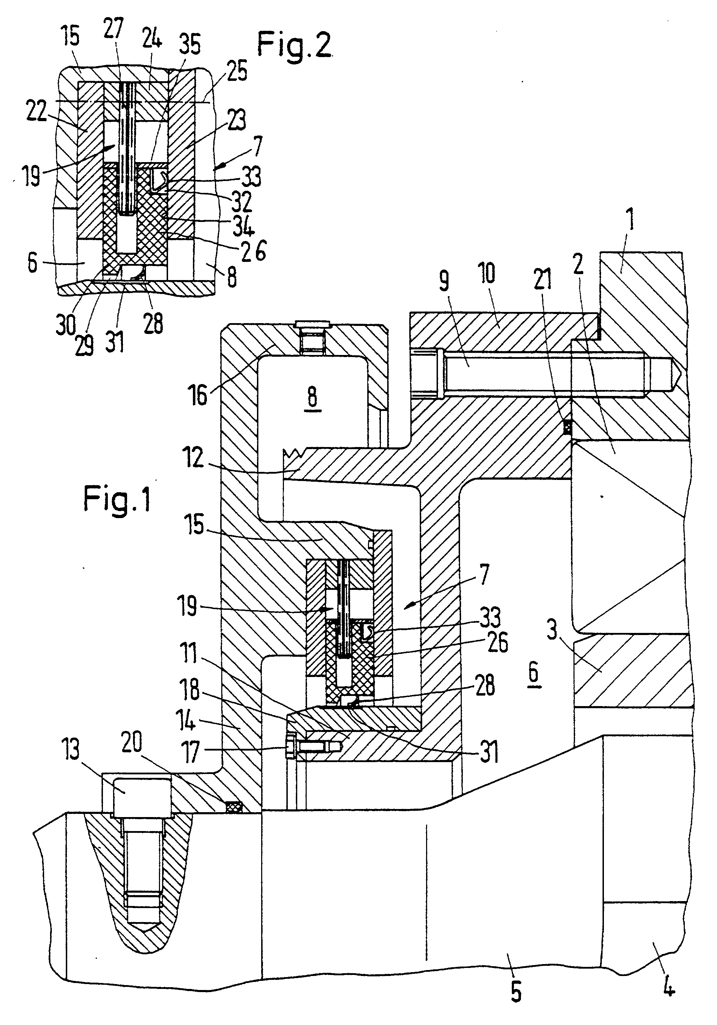

Bei der Durchbiegungseinstellwalze der Fig. 1 und 2 ist ein Walzenmantel 1 über ein Wälzlager 2 auf einem Führungselement 3 gelagert, das auf parallelen Führungsflächen 4 an einem drehfest gelagerten Träger 5 radial verschiebbar ist. Der Mantel 1 kann daher insgesamt einen Hub, den sogenannten Mantelhub, durchführen. Nicht veranschaulicht ist es, daß über die Länge des Walzenmantels 1 hydrostatische Stützelemente oder andere Durchbiegungseinstellelemente vorgesehen sind, die den Mantel 1 belasten und ihm die gewünschte Durchbiegung verleihen.

Im Innenraum 6, also im Raum innerhalb des Mantels 1 und in den nach außen anschließenden Räumen, befindet sich daher eine Hydraulikflüssigkeit, insbesondere Öl, die unter einem gewissen Druck, in der Regel nur wenig über dem atmosphärischen Druck, steht. Eine Dichtungsanordnung 7 sorgt dafür, daß keine Druckflüssigkeit aus dem Innenraum 6 zur Atmosphäre 8 hin austritt. Zu diesem Zweck ist am Mantel 1 mittels Schrauben 9 eine Abdeckung 10 befestigt, die einen inneren Zylinderring 11 und einen äußeren Zylinderring 12 aufweist. Mit Hilfe von Schrauben 13 ist am Träger 5 ein Flansch 14 befestigt, der einen inneren Zylinderring 15 und einen äußeren Zylinderring 16 aufweist. Am inneren Zylinderring 11 der Abdeckung 10 ist mit Schrauben 17 ein innerer Stützring 18 der Dichtringanordnung 7 befestigt. Am inneren Zylinderring 15 des Flansches 14 ist eine Ringnut 19 befestigt. Der Aufbau der Dichtungsanordnung 7 wird nachstehend in Verbindung mit Fig. 2 näher erläutert. Außer dieser Dichtungsanordnung 7 sind noch elastische Dichtringe als Festdichtungen vorgesehen, wie dies beispielsweise bei den Dichtringen 20 und 21 gezeigt ist.

Die Ringnut 19 der Dichtungsanordnung 7 wird durch zwei Ringplatten 22 und 23 sowie einen Abstandsring 24 gebildet, die durch angedeutete Schrauben 25 am inneren Zylinder 15 befestigt sind. In der Ringnut 19 ist ein Ringkörper 26 radial verschiebbar und durch eine Drehmomentstütze 27 in der Form eines radial verlaufenden Stiftes, der in Bohrungen des Ringkörpers 26 und des Abstandsringes 24 eingreift, gegen Drehung gesichert. Der Ringkörper 26 trägt am inneren Umfang eine Radialdichtlippe 28 und, ihr vorgeschaltet, einen mit Durchbrüchen 29 versehenen Stützflansch 30. Die Radialdichtlippe 28 liegt an einer zylindrischen Dichtfläche 31 an, die eine Verschleißschutzbeschichtung trägt. In einer Aussparung 32 des Ringkörpers 26 ist eine Axialdichtlippe 33 vorgesehen, die an der der Atmosphäre benachbarten Seitenwand 34 anliegt. Die Lippen 28 und 33 sind einstückig mit dem Ringkörper 26 ausgebildet, der aus einem Kunststoff, beispielsweise Polytetrafluoräthylen besteht. Die Lippen werden zusätzlich durch den Flüssigkeitsdruck an die Gegenfläche gedrückt und können noch durch eine Feder belastet sein. Am Außenumfang befindet sich ein Metallring 35 in der Form eines Stahlbandringes, der den Ringkörper 26 versteift.

Beim Zusammenbau wird zunächst die Abdeckung 10 am Mantel 1 und dann der Stützring 18 an der Abdeckung 10 befestigt. Dann wird in einer Vormontage die Ringplatte 22, der Abstandsring 24 und, nachdem der Ringkörper 26 eingelegt ist, die Ringplatte 23 am Zylinderring 15 befestigt. Dann wird der Flansch 14 an Ort und Stelle geschoben, wobei die Radialdichtungslippe 28 mit der zylindrischen Dichtfläche 31 in Eingriff kommt.

Im Betrieb bleibt die Zuordnung von Ringkörper 26 und zylindrischer Dichtfläche 31 erhalten, auch wenn der Mantel 1 radial zum Träger 5 verschoben wird. Denn diese Bewegung führt lediglich zu einer Radialverschiebung des Ringkörpers 26.

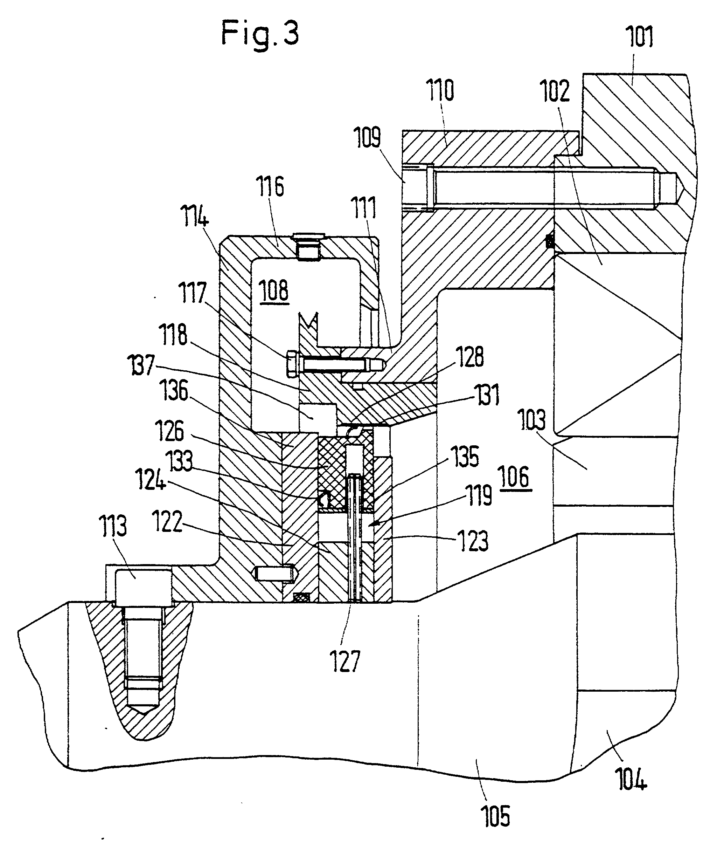

Bei der Ausführungsform nach Fig. 3 werden für entsprechende Teile um 100 erhöhte Bezugszeichen verwendet. Bei dieser Konstruktion befindet sich die Ringnut 119 nahe am Träger 105. Es genügt, wenn die Abdeckung 110 einen einzigen Zylinderring 111 besitzt. Insofern ist die radiale Erstreckung sehr gering. Außerdem steht die Ringplatte 122 mit ihrem Teil 136 radial über die Ringplatte 123 über. Der Ringkörper 126 findet daher über seine gesamte Länge Abstützung an der der Atmosphäre benachbarten Seitenwand der Ringnut 119. Zum Ausgleich besitzt der Zylinderring 118 neben der zylindrischen Dichtfläche 131 einen Rücksprung 137, in den das überstehende Teil 136 eintauchen kann.

Von den dargestellten Ausführungsformen kann in vielfacher Hinsicht abgewichen werden, ohne den Grundgedanken der Erfindung zu verlassen.

## Patentansprüche

1. Durchbiegungseinstellwalze mit Mantelhub, deren Mantel (1; 101) über eine hydrostatische Stützeinrichtung drehbar auf einem drehfest gehaltenen Träger (5; 105) abgestützt ist, wobei an den Walzenenden zwischen Mantel (1; 101) und Träger (5; 105) eine Radialdichtung (28; 128) und eine Axialdichtung (33; 133) vorgesehen ist, **dadurch gekennzeichnet, daß** ein Ringkörper (26; 126) in einer mit dem einen Teil verbundenen Ringnut (19; 119) radial verschiebbar angeordnet ist, an seiner der Atmosphäre (8; 108) benachbarten Stirnseite eine Axialdichtlippe (33; 133), die an der einen Seitenwand der Ringnut (19; 119) anliegt, trägt und an einem Umfang eine Radialdichtlippe (28; 128), die an einer mit dem anderen Teil verbundenen und daher relativ zu ihr rotierenden, zylindrischen Dichtfläche (31; 131) anliegt, trägt, wobei die Ringnut (19; 119) für einen Hub von mindestens 20 mm ausgelegt ist.

2. Walze nach Anspruch 1, **dadurch gekennzeichnet, daß** die Ringnut (119) mit dem Träger (105) und die zylindrische Dichtfläche (131) mit dem Mantel (101) verbunden ist.

3. Walze nach Anspruch 1 oder 2, **dadurch gekennzeichnet, daß** sich die Radialdichtlippe (128) am äußeren Umfang des Ringkörpers (129) und die Ringnut (119) nahe dem Träger (104) befindet.

4. Walze nach einem der Ansprüche 1 bis 3, **dadurch gekennzeichnet, daß** die der Atmosphäre (108) benachbarte Seitenwand der Ringnut (119) radial über die andere Seitenwand der Ringnut übersteht und neben der zylindrischen Dichtfläche (131) ein Rücksprung (137) zur Aufnahme des überstehenden Teils (136) vorgesehen ist.

5. Walze nach einem der Ansprüche 1 bis 4, **dadurch gekennzeichnet, daß** die Ringnut (19; 119) durch zwei Ringplatten (22, 23; 122, 123) und einen dazwischen angeordneten Abstandsring (24; 124) gebildet ist.

6. Walze nach einem der Ansprüche 1 bis 5, **dadurch gekennzeichnet, daß** der Ringkörper (26; 126) durch eine Drehmomentstütze (27; 127) gegen Drehung relativ zur Ringnut (19; 119) gesichert ist.

7. Walze nach einem der Ansprüche 1 bis 6, **dadurch gekennzeichnet, daß** der Ringkörper (26; 126) durch einen Metallring (35; 135) versteift ist.

8. Walze nach Anspruch 7, **dadurch gekennzeichnet, daß** der Metallring (35; 135) durch ein Stahlband gebildet ist, das an dem von der Radialdichtlippe (28; 128) freien Umfang des Ringkörpers (26; 126) anliegt.

9. Walze nach einem der Ansprüche 1 bis 8, **dadurch gekennzeichnet, daß** der Ringkörper (26) neben der Radialdichtlippe (28) einen mit Durchbrüchen (29) versehenen Stützflansch (30) trägt.

10. Walze nach einem der Ansprüche 1 bis 9, **dadurch gekennzeichnet, daß** zumindest eine Dichtlippe (28; 128) einstückig mit dem Ringkörper (26; 126) gebildet ist.

## Claims

1. Controlled deflection roll with shell displacement, whose shell (1; 101) is supported by a hydrostatic supporting device such that it can rotate on a support (5; 105) which is held fixed against rotation, a radial seal (28; 128) and an axial seal (33; 133) being provided at the ends of the roll, between the shell (1; 101) and support (5; 105), **characterized in that** an annular body (26; 126) is arranged such that it can be displaced radially in an annular groove (19; 119) connected to one part, on its end adjacent to the atmosphere (8; 108), bears an axial sealing lip (33; 133) which bears on one side wall of the annular groove (19; 119) and, on a circumference, bears a radial sealing lip (28; 128), which bears on a cylindrical sealing surface (31; 131) which is connected to the other part and therefore rotates relative to the said radial sealing lip (28; 128), the annular groove (19; 119) being designed for a displacement of at least 20 mm.

2. Roll according to Claim 1, **characterized in that** the annular groove (119) is connected to the support (105), and the cylindrical sealing surface (131) is connected to the shell (101).

3. Roll according to Claim 1 or 2, **characterized in that** the radial sealing lip (128) is located on the outer circumference of the annular body (129), and the annular groove (119) is located close to the support (104).

4. Roll according to one of Claims 1 to 3, **characterized in that** the side wall of the annular groove (119) which is adjacent to the atmosphere (108) projects radially beyond the other side wall of the annular groove and, beside the cylindrical sealing surface (131), a recess (137) is provided to accommodate the projecting part (136).

5. Roll according to one of Claims 1 to 4, **characterized in that** the annular groove (19; 119) is formed by two annular plates (22, 23; 122, 123) and a spacer ring (24; 124) arranged between them.

6. Roll according to one of Claims 1 to 5, **characterized in that** the annular body (26; 126) is secured against rotation relative to the annular groove (19; 119) by a torque support (27; 127).

7. Roll according to one of Claims 1 to 6, **characterized in that** the annular body (26; 126) is stiffened by a metal ring (35; 135).

8. Roll according to Claim 7, **characterized in that** the metal ring (35; 135) is formed by a steel strip which bears on the free circumference of the annular body (26; 126) which is free of the radial sealing lip (28; 128).

9. Roll according to one of Claims 1 to 8, **characterized in that**, in addition to the radial sealing lip (28), the annular body (26) bears a supporting flange (30) provided with apertures (29).

10. Roll according to one of Claims 1 to 9, **characterized in that** at least one sealing lip (28; 128) is formed in one piece with the annular body (26; 126).

## Revendications

1. Rouleau à réglage de la flexion avec levage d'enveloppe, dont l'enveloppe (1 ; 101) est soutenue de façon à pouvoir tourner par un dispositif de soutien hydrostatique, sur un support (5; 105) maintenu fixe en rotation, un joint d'étanchéité radiale (28; 128) et un joint d'étanchéité axiale (33; 133) étant prévus sur les extrémités de rouleau entre l'enveloppe (1; 101) et le support (5; 105), **caractérisé en ce qu'**un corps annulaire (26; 126) est disposé de façon à pouvoir être déplacé radialement dans une rainure annulaire (19; 119) reliée à l'une des parties, sur son côté frontal voisin de l'atmosphère (8; 108) il porte une lèvre d'étanchéité axiale (33; 133) qui s'appuie sur l'une des parois latérales de la rainure annulaire (19; 119) et sur un pourtour il porte une lèvre d'étanchéité radiale (28; 128), qui s'appuie sur une surface d'étanchéité cylindrique (31; 131) reliée à l'autre partie et par conséquent rotative par rapport à elle-même, la rainure annulaire (19; 119) étant dimensionnée pour un levage d'au moins 20 mm.

2. Rouleau selon la revendication 1, **caractérisé en ce que** la rainure annulaire (119) est reliée au support (105) et la surface d'étanchéité cylindrique (131) est reliée à l'enveloppe (101).

3. Rouleau selon la revendication 1 ou 2, **caractérisé en ce que** la lèvre d'étanchéité radiale (128) se trouve sur le pourtour extérieur du corps annulaire (129) et la rainure annulaire (119) se trouve près du support (104).

4. Rouleau selon l'une quelconque des revendications 1 à 3, **caractérisé en ce que** la paroi latérale voisine de l'atmosphère (108) de la rainure annulaire (119) dépasse radialement au-dessus de l'autre paroi latérale de la rainure annulaire, et un retrait (137) est prévu à côté de la surface d'étanchéité cylindrique (131) pour recevoir la partie (136) qui dépasse.

5. Rouleau selon l'une quelconque des revendications 1 à 4, **caractérisé en ce que** la rainure annulaire (19; 119) est formée par deux plaques annulaires (22, 23; 122, 123) et par un anneau d'espacement (24; 124) disposé entre elles.

6. Rouleau selon l'une quelconque des revendications 1 à 5, **caractérisé en ce que** le corps annulaire (26; 126) est bloqué par un bras de réaction de couple (27; 127) contre une rotation par rapport à la rainure annulaire (19 ; 119).

7. Rouleau selon l'une quelconque des revendications 1 à 6, **caractérisé en ce que** le corps annulaire (26; 126) est rendu plus rigide par un anneau métallique (35; 135).

8. Rouleau selon la revendication 7, **caractérisé en ce que** l'anneau métallique (35; 135) est formé par une bande d'acier qui s'appuie sur le pourtour libre de la lèvre d'étanchéité radiale (28; 128) du corps annulaire (26; 126).

9. Rouleau selon l'une quelconque des revendications 1 à 8, **caractérisé en ce que** le corps annulaire (26) porte à côté de la lèvre d'étanchéité radiale (28) une collerette d'appui (30) pourvue de passages (29).

10. Rouleau selon l'une quelconque des revendications 1 à 9, **caractérisé en ce qu'**au moins une lèvre d'étanchéité (28; 128) est formée d'un seul tenant avec le corps annulaire (26; 126).
